# EUROPEAN PATENT APPLICATION

(11) **EP 2 561 945 A1**
(43) Date of publication of application: **27.02.2013**
(21) Application number: 12182096.3
(22) Date of filing: 13.02.2009
(51) Int. Cl.: B23K 9/32, B23K 9/095, B23K 15/00, B23K 15/02, H05H 1/36

(54) **Binary signal detection**

(30) Priority: 21.02.2008 US 35125
(62) Divisional of application: 09712914.2
(71) Applicant: Hypertherm, Inc., Hanover, NH 03755 (US)
(72) Inventor: Borowy, Dennis, M, Hanover, NH New Hampshire 03755 (US); Roberts, Jesse, A, Cornish, NH New Hampshire 03745 (US)
(74) Representative: Trueman, Lucy Petra

(57) **Abstract**

A system and method for identifying a torch assembly associated with a thermal processing system including a detector (10) that detects a multi-bit binary signal based on a plurality of open circuits or closed circuits with the thermal processing system. Each representative binary signal can comprise an individual physical component (21). The system can also include a control mechanism (20) in communication with the detector, the control mechanism identifying at least one characteristic of the torch assembly based upon the multi-bit binary signal.

## Description

### FIELD OF THE INVENTION

The invention relates to identifying characteristics of a thermal processing system. Specifically, the invention relates to binary signal detection of device associated with a thermal processing system.

### BACKGROUND OF THE INVENTION

The two main components of a plasma arc torch systems and welding equipment are a torch assembly and a power supply assembly. The torch can be affixed to a power supply using one of two methods. In the first method, the torch can be plumbed inside the unit and can only be changed by using a tool to enter the power supply. In the second method, the torch can be attached to a power supply using a detachable connector assembly.

A detachable connector assembly can provide some advantages. First, it is simple to exchange hand and machine style torches or different length torches. Second, it is easy to repair a damaged torch. Third, it may be more convenient to store a detached torch separate from the power supply.

Some of the disadvantages of a removable torch are that different lead lengths need different regulator pressure, different lead lengths need different start timing, machine torches and hand torches need to be distinguished for safety reasons, machine torch configurations need to activate remote pendant control, and different torches with the same connector can have different amperage levels. Existing designs can avoid these disadvantages in various ways. To accommodate different lead lengths, tradeoffs can be made in machine performance, or unintuitive manual adjustments have to be made. Additionally, long lead lengths may not be offered because of starting limitations.

For safety concerns, existing designs that use the same connector at different amperage levels can require mechanical adjustments to the connector (holes plugged and housings trimmed). Signal pin locations can be physically rearranged to mechanically inhibit interchangeability. However, pin rearrangement to mechanically inhibit interchangeability can be limited in the number of combinations.

Previous designs have tried to overcome these problems, e.g., by using calibrated resistors to identify a torches or components, by measuring an impedance of a motor in a welding gun to identify a type of gun, or by utilizing electrical circuits or microchips to identify components or a type of gun. Measuring a resistance or impedance can be undesirable, as the electrical components can be vulnerable to corrosion, affecting the ability to measure resistance or impedance, which affects accuracy. Utilizing a microchip or a circuit can be costly, require several parts to manufacture, and may not be sufficiently robust for an industrial environment. It is desirable to have a robust system that is durable and can withstand use.

### SUMMARY OF THE INVENTION

The invention, in one aspect, includes a system for identifying a torch assembly associated with a thermal processing system. The system can include a detector that detects a multi-bit binary signal based on a plurality of open circuits or closed circuits with the thermal processing system. The system can also include a control mechanism in communication with the detector, the control mechanism identifying at least one characteristic of the torch assembly based upon the multi-bit binary signal. The system can include one ore more single, binary physical components (e.g., a pin, a jumper between two pins, etc.) that can form the basis for the multi-bit binary signal based on a plurality of open circuits or closed circuits.

The invention, in one aspect, includes a method for identifying a torch assembly associated with a thermal processing system. The method can include connecting a torch assembly to the thermal processing system and detecting a plurality of open and closed circuits between the torch and the thermal processing system that establish a multi-bit binary signal, wherein the signal corresponds to a characteristic of the torch assembly.

The invention, in another aspect, includes a torch for a plasma arc torch system. The torch can include a plurality of electrical paths configured to carry a current and a plurality of devices having a first state that permits current to pass through the electric path and a second state that prevents current from passing through the electric path. The selective configuration of each device to one of the first or second state can form a multi-bit binary signal identifying the torch.

The invention, in yet another aspect, includes a connector assembly for a plasma arc torch system. The connector assembly can include a housing and a gas conduit in the housing for passing a gas between a gas supply and a plasma arc torch assembly. The connector assembly can also include an operational current conduit in the housing to conduct an operational current from a power supply to the plasma arc torch and a plurality of pin locations, wherein the selective population of a pin location corresponds to a characteristic of the plasma torch assembly.

The invention, in another aspect, includes an assembly for identifying a torch assembly associated with a thermal processing system. The assembly can include a means for detecting at least one of an open circuit means or a closed circuit means. The assembly can also include a control means for forming a binary signal based on the detected open circuit means or closed circuit means and a means for identifying the device associated with the thermal processing system based on the binary signal.

In other examples, any of the aspects above, or any apparatus or method described herein, can include one or more of the following features.

In some embodiments, the thermal processing system is at least one of a welding apparatus or a plasma arc torch system.

In some embodiments, a torch assembly includes a connector assembly configured to engage with a corresponding connector assembly to establish at least one of the open circuit or closed circuit. A corresponding connector assembly can include a plurality of features adapted to receive a pin, wherein a feature receiving a pin of the connector assembly forms the closed circuit and a feature that does not receive a pin of the connector assembly forms the open circuit. In some embodiments, an open circuit corresponds to or is associated with a logic high or logic low, defining a bit pattern of a multi-bit binary signal identifying a torch assembly.

In some embodiments, a control mechanism includes at least one of an integrated circuit, software, or a digital logic device to process a multi-bit binary signal. In some embodiments, a control mechanism can identify the torch assembly on a look up table, the multi-bit binary signal corresponding to the torch assembly.

In some embodiments, at least one of a gas pressure, gas timing, pilot timing, cut timing or mechanized remote in a thermal processing system can be varied based on an identified torch assembly.

In some embodiments, a device having a first state that permits current to pass through an electrical path and a second state that prevents current from passing through the electrical path can be pin locations. In some embodiments, a populated pin location corresponds to a first state that forms a closed circuit and an unpopulated pin location corresponds to a second state that forms an open circuit. In other embodiments, the devices having a first and second state are switches. The device in the first state can generate a closed circuit and a device in the second state can generate an open circuit. In some embodiments, the closed circuit generated by the device in the first state corresponds to a logic high or a logic low, defining a bit pattern of the multi-bit binary signal identifying the torch.

In some embodiments, a torch for a plasma arc torch system includes a detector to detect a multi-bit binary signal based on at least one of the open or closed circuits and a control mechanism processing a multi-bit binary-signal based on the at least one of the open or closed circuits, wherein a bit pattern of the multi-bit binary signal identifies the torch assembly.

In some embodiments, a connector assembly can include a plurality of pin locations, wherein the selective population of a pin location generates a binary signal that corresponds to the identification of the manufacturer of the torch assembly. In some embodiments, a populated pin location forms a portion of a closed circuit and an unpopulated pin location forms an open circuit, such that a combination of open circuits or closed circuits create a binary signal.

The connector assembly can be disposed relative to a plasma arc torch or a power supply for a plasma arc torch system. In some embodiments, the plasma arc torch system includes a power supply having a corresponding connector assembly that receives the connector assembly, wherein closed circuits are generated in populated pin locations and open circuits are generated in unpopulated pin locations. A characteristic of the plasma torch assembly can be identified by a look-up table stored in a memory device of a power supply using a binary signal based on the selective population of a pin location.

In some embodiments, a power supply means is engaged with a torch means associated with the thermal processing system to generate at least one of the open circuit means or closed circuit means.

Other aspects and advantages of the invention can become apparent from the following drawings and description, all of which illustrate the principles of the invention, by way of example only.
The following numbered paragraphs detail further aspects and embodiments of the invention.
1. A system for identifying a torch assembly associated with a thermal processing system comprising:
   a detector that detects a multi-bit binary signal based on a plurality of open circuits or closed circuits with the thermal processing system; and
   a control mechanism in communication with the detector, the control mechanism identifying at least one characteristic of the torch assembly based upon the multi-bit binary signal.
2. The system of paragraph 1 wherein the thermal processing system is at least one of a welding apparatus or a plasma arc torch system.
3. The system of paragraph 1 wherein the torch assembly comprises a connector assembly configured to engage with a corresponding connector assembly to establish the plurality of open circuits or closed circuits.
4. The system of paragraph 3 wherein the corresponding connector assembly comprises a plurality of features adapted to receive a pin, wherein a feature receiving a pin of the connector assembly forms the closed circuit and a feature that does not receive a pin of the connector assembly forms the open circuit.
5. The system of paragraph 1 wherein the open circuit corresponds to a logic high or logic low, defining the bit pattern of the multi-bit binary signal identifying the torch assembly.
6. The system of paragraph 1 wherein the control mechanism includes at least one of an integrated circuit, software, or a digital logic device to process the multi-bit binary signal.
7. The system of paragraph 1 wherein the control mechanism identifies the torch assembly on a look up table, the multi-bit binary signal corresponding to the torch assembly.
8. A method for identifying a torch assembly associated with a thermal processing system comprising: connecting a torch assembly to the thermal processing system; and detecting a plurality of open and closed circuits between the torch and the thermal processing system that establish a multi-bit binary signal, wherein the signal corresponds to a characteristic of the torch assembly.
9. The method of paragraph 8 further comprising varying at least one of a gas pressure, gas timing, pilot timing, cut timing or mechanized remote in the thermal processing system, based on the identified torch assembly.
10. The method of paragraph 8 further comprising associating an open circuit with at least one of a logic high or a logic low, defining the bit pattern of the multi-bit binary signal.
11. A torch for a plasma arc torch system comprising: a plurality of electrical paths configured to carry a current; and a plurality of devices having a first state that permits current to pass through the electric path and a second state that prevents current from passing through the electric path, the selective configuration of each device to one of the first or second state forming a multi-bit binary signal identifying the torch.
12. The torch of paragraph 11 wherein the devices are pin locations, a populated pin location corresponding to a first state that forms a closed circuit and an unpopulated pin location corresponding to a second state that forms an open circuit.
13. The torch of paragraph 11 wherein the devices are switches.
14. The torch of paragraph 11 wherein a device in the first state generates a closed circuit and a device in the second state generates an open circuit.
15. The torch of paragraph 14 wherein the closed circuit corresponds to a logic high or a logic low, defining a bit pattern of the multi-bit binary signal identifying the torch.
16. The torch of paragraph 14 further comprising: a detector to detect the multi-bit binary signal based on a plurality of open or closed circuits; and a control mechanism processing a multi-bit binary-signal based on the at least one of the open or closed circuits, wherein a bit pattern of the multi-bit binary signal identifies the torch.
17. A connector assembly for a plasma arc torch system, comprising: a housing; a gas conduit in the housing for passing a gas between a gas supply and a plasma arc torch assembly; an operational current conduit in the housing to conduct an operational current from a power supply to the plasma arc torch assembly; a plurality of pin locations, wherein the selective population of a pin location corresponds to a characteristic of the plasma torch assembly.
18. The connector assembly of paragraph 17 wherein the selective population of a pin location generates a binary signal that corresponds to the identification of the manufacturer of the torch assembly.
19. The connector assembly of paragraph 17 wherein a populated pin location forms a portion of a closed circuit and an unpopulated pin location forms an open circuit, such that a combination of open circuits or closed circuits create a binary signal.
20. The connector assembly of paragraph 17 wherein the connector assembly is disposed relative to the plasma arc torch.
21. The connector assembly of paragraph 20 further comprising a power supply having a corresponding connector assembly that receives the connector assembly, wherein closed circuits are generated in populated pin locations and open circuits are generated in unpopulated pin locations.
22. The connector assembly of paragraph 17 wherein the characteristic of the plasma torch assembly is identified by a look-up table stored in a memory device of a power supply using a binary signal based on the selective population of a pin location.
23. An assembly for identifying a torch assembly associated with a thermal processing system comprising: a means for detecting at least one of an open circuit means or a closed circuit means; a control means for forming a binary signal based on the detected open circuit means or closed circuit means; and a means for identifying the device associated with the thermal processing system based on the binary signal.
24. The assembly of paragraph 23 further comprising a power supply means engaged with a torch means associated with the thermal processing system to generate at least one of the open circuit means or closed circuit means.

### BRIEF DESCRIPTION OF THE DRAWINGS

The advantages of the invention described above, together with further advantages, may be better understood by referring to the following description taken in conjunction with the accompanying drawings. The drawings are not necessarily to scale, emphasis instead generally being placed upon illustrating the principles of the invention.

**Figure 1** is a schematic drawing of an identification module, according to an illustrative embodiment.

**Figure 2** is a schematic of a mechanized plasma arc torch system, according to an illustrative embodiment.

**Figure 3** is a schematic of a handheld material processing device and a power supply, according to an illustrative embodiment.

**Figures 4A** **and** **4B** show a chart identifying a thermal processing system using a bit pattern of a multi-bit binary signal, according to an illustrative embodiment.

**Figure 5** is a schematic of a connector assembly of a device associated with a thermal processing system engaged with a corresponding connector assembly, according to an illustrative embodiment.

**Figure 6A** is a drawing of an end view of a connector assembly of a device associated with a thermal processing system, according to an illustrative embodiment.

**Figure 6B** is a drawing of an end view of a corresponding connector assembly adapted to mate with the connector assembly of **Figure 6A****,** according to an illustrative embodiment.

### DETAILED DESCRIPTION OF THE INVENTION

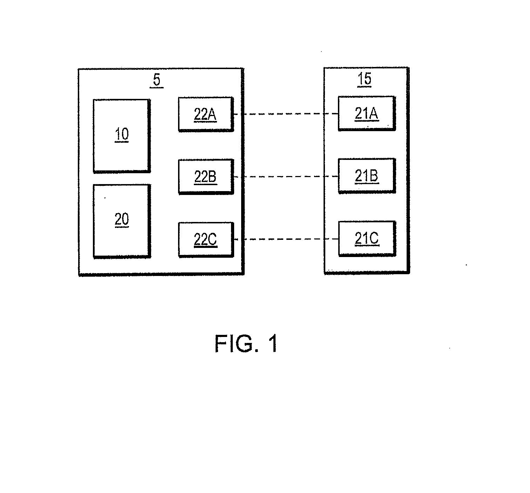

**Figure 1** is a schematic drawing of an identification module 5 according to an illustrative embodiment. An identification module 5 includes a detector 10 that detects a multi-bit binary signal based on at least one of an open circuit or closed circuit signal when the identification module 5 is connected to a device 15 associated with a thermal processing system. The identification module 5 also includes a control mechanism 20 in communication with the detector 10. The control mechanism 20 can receive a multi-bit binary signal based on a detected open circuit, detected closed circuit signal or any combination thereof, a bit pattern of the multi-bit binary signal identifying at least one characteristic of the device 15 associated with the thermal processing system. The binary signal can be processed to produce a bit pattern or a binary code. The control mechanism 20 can process a multi-bit binary-signal based at least one of the open or closed circuits, wherein a bit pattern of the multi-bit binary signal identifies the torch.

In some embodiments, the device 15 associated with a thermal processing system includes a plurality of electrical paths configured to carry a current and a plurality of devices having a first state that permits current to pass through the electrical path and a second state that prevents current from passing through the electrical path, the selective configuration of each device to one or the first or second state forming a multi-bit binary signal identifying the torch. The first state can form a closed circuit and the second state can form an open circuit. The device having a first and second state can be controlled between the first and second states. In some embodiments, the devices having a first and second state are electrical switches that can be manipulated and/or controlled to establish open circuits, closed circuits, or any combination thereof.

In some embodiments, the devices having a first state and a second state are pin locations. By way of example, the device 15 associated with a thermal processing system can include pin locations 21A, 21B or 21C that can be selectively populated by pins. In some embodiments the identification module 5 can include features 22A, 22B or 22C that are adapted to mate or receive pins. In some embodiments, the device 15 can mate with the identification module 5 and a feature 22A, 22B, or 22C that receives a pin generates a closed circuit while a feature 22A, 22B, or 22C that does not receive a pin generates an open circuit. Pin locations 21A, 21B or 21C can be selectively populated to generate a pattern of open circuits, closed circuits, or any combination thereof to generate a binary signal. In some embodiments, pin locations 21A, 21B or 21C populateable by pins are disposed relative to the identification module 5 and features 22A, 22B or 22C adapted to mate or receive pins are disposed relative to the device 15.

In some embodiments, an open circuit corresponds to a logic high or a logic low, thereby defining a bit pattern of the multi-bit binary signal identifying the device 15 associated with the thermal processing system. In some embodiments, a closed circuit corresponds to a logic high or a logic low, thereby defining the bit pattern of the multi-bit binary signal.

In some embodiments, the control mechanism 20 includes at least one of an integrated circuit, software, or a digital logic device to process the multi-bit binary signal.

One advantage of a binary system over previous designs (e.g., analog devices) is that systems utilizing binary signals can be easier to package (e.g., no soldering, potting, more robust than an analog device). Binary systems can be easier to manufacture, inspect and/or diagnose failures in the system as compared to analog devices. Binary systems using binary signals to identify devices can also be more reliable than analog devices that can have inherent tolerances. Binary signals can be easier to implement in control electronics than analog devices, as a digital signal is easily utilized by software. Furthermore, an analog system can require an inventory of various discrete parts associated with different devices. In contrast, a binary system can require less parts to identify different systems.

In some embodiments, the thermal processing system is a plasma arc torch system or a welding apparatus. The device associated with the thermal processing system 15 can be a specific torch assembly that can include electrical leads for the torch. The identification module 5 can be used to identify characteristics of the device 15, for example, the manufacturer of the device 15 or characteristics that can indicate a specific lead length, distinguish between a mechanized versus handheld device and/or identify an amperage level of the system. As a result, identifying the device 15 can help determine, by way of example, the necessary regulator pressure, the correct start timing, whether or not remote pendant control should be activated, torch compatibility, torch accessories, and the necessary amperage levels. In some embodiments, the identification module 5 is disposed in a power supply for the thermal processing system. In some embodiments, where the device 15 is a torch assembly in a plasma arc torch system, a gas pressure, gas timing, pilot timing, cut timing or mechanized remote in a thermal processing system can be varied based on the identified torch assembly.

hi some embodiments, the identification module 5 is used to not only identify the device 15 but also determine whether the correct device is being used. For example, if the identification module 5 is disposed relative to a power supply, the identification module 5 can be used to ensure that a device 15 of a lower amperage level than that provided by the power supply is not connected to the power supply. In some embodiments, if the power supply identifies a device as having a lower amperage level than the power supply, the power supply can disable and/or alert the user of the error.

In some embodiments, the device 15 is a torch assembly and a method for identifying the torch assembly associated with a thermal processing system includes connecting a torch assembly to the thermal processing system and detecting a plurality of open and closed circuits between the torch and the thermal processing system that establish a multi-bit binary signal, wherein the signal corresponds to a characteristic of the torch assembly. In some embodiments, at least one of a gas pressure, gas timing, pilot timing, cut timing or mechanized remote in the thermal processing system is varied, based on the identified torch assembly. The method can also include associating an open circuit with at least one of a logic high or a logic low, defining the bit pattern of the multi-bit binary signal.

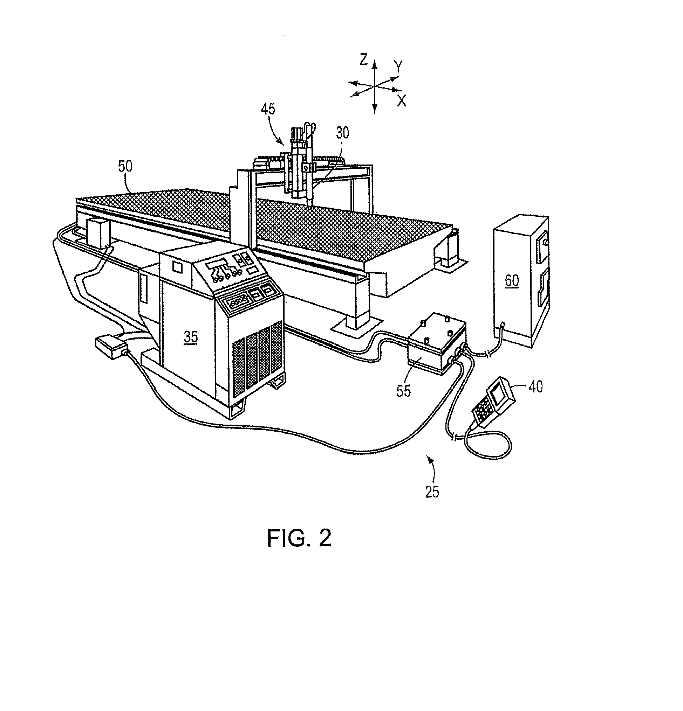

**Figure 2** is a schematic drawing of a mechanized plasma arc torch system 25, according to an illustrative embodiment. The mechanized plasma arc system 25 includes a plasma arc torch 30, an associated power supply 35, a remote high-frequency (RHF) console 40, a gas supply 35, a positioning apparatus 45, a cutting table 50, a torch height control 55, and an associated computerized numeric controller 60.

In some embodiments, the power supply 35 includes an identification module (not shown) for identifying characteristics of the plasma arc torch system 25 when the system is connected to the power supply 35. The identification module can identify the plasma arc torch system 25 as a mechanized system and can also identify a lead length, amperage level, or whether remote pendant control should be activated. It is contemplated that the identification module can be disposed relative to other components of the system and is not limited to the power supply 35.

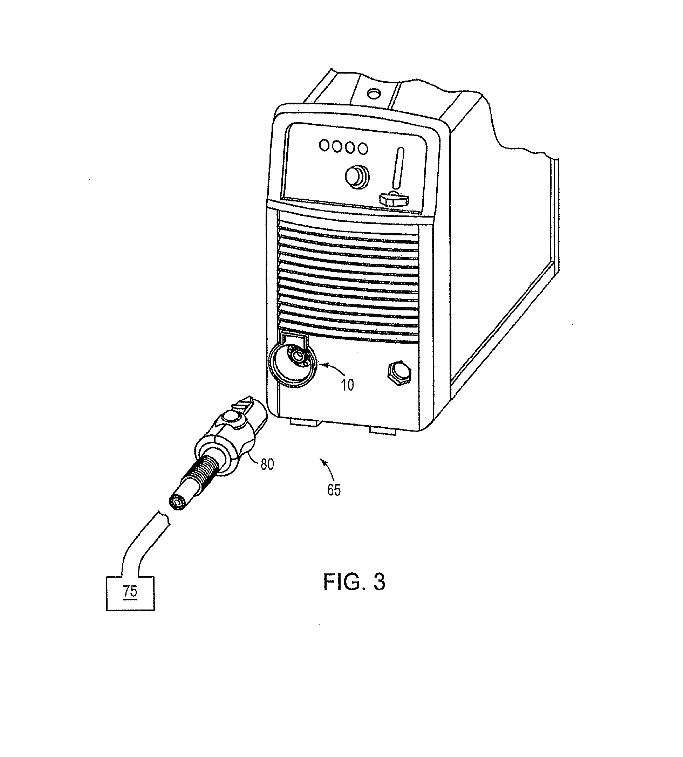

**Figure 3** is a schematic drawing of a handheld thermal processing system 65, according to an illustrative embodiment. The handheld thermal processing system 65 includes a power supply assembly 70 and a device 75 associated with the thermal processing system. The device 75 associated with the thermal processing system is adapted to be connected and disconnected with the power supply 70.

In some embodiments, the device 75 is a torch for a thermal processing system, such as a plasma arc torch or a torch for a welding apparatus. The device 75 can be a torch assembly that includes a lead and a connector assembly 80. The power supply 70 includes a corresponding connector assembly 85 that is designed to receive and/or mate with the connector assembly 80 for the device 75. In some embodiments, the power supply 70 is connected to either a handheld thermal processing system 75 or a mechanized thermal processing system (not shown), such as the mechanized plasma arc torch system of **Figure 2****.**

In some embodiments, the power supply 70 includes an identification module (not shown) such as the identification module of **Figure 1****,** for identifying characteristics of the device 75 associated with the thermal processing system. The device 75 associated with the thermal processing system can be a torch or lead assembly for a plasma arc torch system or welding apparatus. The power supply 70 can include a user interface 90 or console that can be used in connection with the identification module. In some embodiments, for safety reasons, a power supply 70 is not operated in connection with a device having a lower amperage level. As a result, the power supply 70 can use the identification module to determine if a torch or lead assembly can safely operate at a desired amperage level. If the power supply 70 identifies a device 75 as having a lower amperage level than the desired amperage level, the power supply 70 can either disable, fail to start, or notify the user via the user interface 90.

A user interface 90 can also be used to alert a user to the parameters used for the thermal processing system, such as the start timing, regulator pressure, whether remote pendant control is activated, etc. In some embodiments, the user interface 90 can be used to instruct a user to take certain action. For example, a user interface 90 may instruct a user to activate remote pendant control depending on the particular device that is identified. In some embodiments, a power supply 70 can be used for various torch assemblies that require different start timing. As a result, the identification module can be used by the power supply 70 to identify the torch assembly and associate the torch assembly with a specific start timing. The user interface 90 can be used to instruct the user as to the specific start timing required for the system.

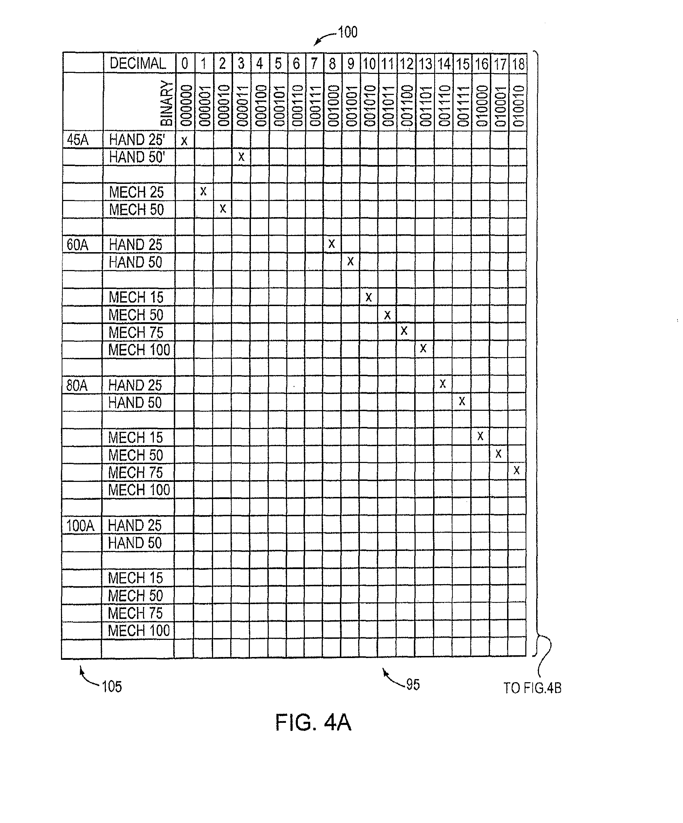

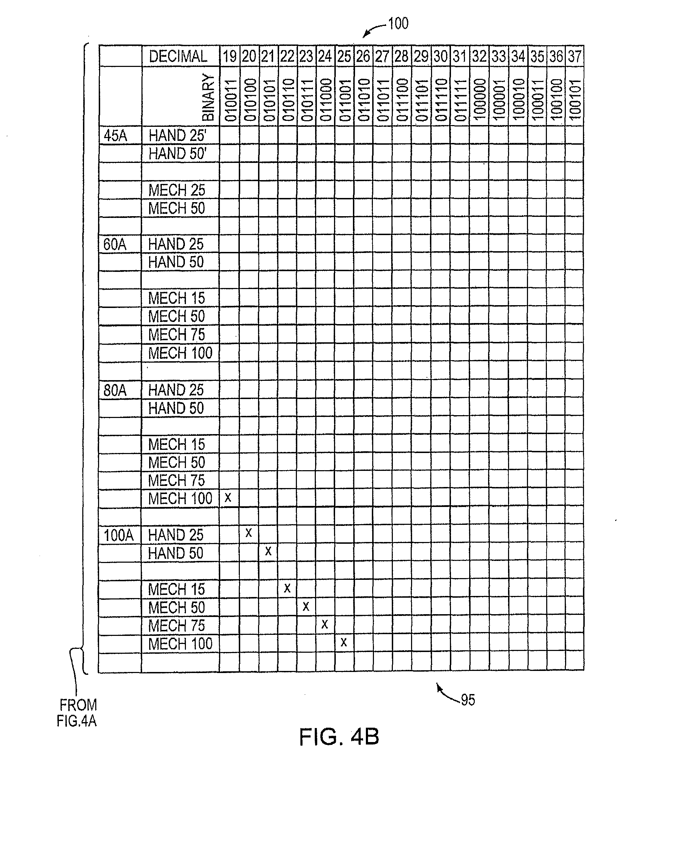

**Figures 4A** **and** **4B** show a look-up table 95 or chart identifying a thermal processing system using a bit pattern of a multi-bit binary signal, according to an illustrative embodiment. Different patterns of a multi-bit binary signal 100 can be used to identify devices associated with a thermal processing system 105. A multi-bit binary signal 100 can correspond to different devices associated with the thermal processing system 105. The bit pattern of the multi-bit binary signal 100 can be used to identify the type of device 105 connected to, for example, a power supply, or other unit associated with the thermal processing system.

The bit pattern of the multi-bit binary signal 100 can be generated based on a pattern of signals associated with closed circuits, open circuits, or any combination thereof. A closed circuit can be associated with a "logic high" signal and an open circuit can be associated with a "logic low" signal, or vice versa. Based on the pattern of signals, a multi-bit binary signal 100 is generated. A device associated with a thermal processing system 105 can correspond to or be identified by a specific multi-bit binary signal pattern 100. In some embodiments, the bit pattern of the multi-bit binary signal 100 can be used to identify, for example, whether the device is a handheld thermal processing system, such as a handheld portable plasma arc torch, or whether the device is a mechanized thermal processing system, such as a mechanized plasma arc torch system. The bit pattern for the binary signal 100 can also be used to identify, for example, whether a device 105 has a determined lead length, a particular lead characteristic, the necessary regulator pressure, a particular torch accessory, proper torch compatibility, correct start timing, a determined amperage level and/or whether the device needs to activate remote pendant control. The binary signal 100 can be used to identify a characteristic that is not connected to the circuits that are used to form the multi-bit binary signal 100 (e.g., the circuits that are used to form the different open and/or closed circuits are not connected to the lead, the remote pendant control, or the torch itself.)

In some embodiments, an identification device, such as an identification device disposed relative to a power supply, can utilize hardware logic devices, software, or both to receive the multi-bit binary signal 100 based on a pattern of open circuits, closed circuits or any combination thereof and identify a device associated with the thermal processing system 105.

By way of example, in **Figures 4A** **and** **4B**, a binary signal having a bit pattern "000001" can be selected to identify a 45 Amp, "Mech 25" mechanized plasma arc torch system. To generate the bit pattern for the binary signal, a closed loop circuit can be associated with a signal value of "1" and an open loop circuit can be associated with a signal value of "0". By way of example, to appropriately identify the "Mech 25" device, the appropriate bit pattern for the binary signal is generated by forming five open loop circuits followed by one closed loop circuit when the "Mech 25" device is connected to, for example, a power supply.

As shown in **Figures 4A** **and** **4B**, in some embodiments, the binary signal can also have a bit pattern of "000000" formed by six open loop circuits selected to identify a 45 Amp, "Hand 25"' plasma arc torch system. In this embodiment, the appropriate bit pattern for the binary signal is generated by forming six open loop circuits when the "Hand 25"' device is connected to, for example, a power supply.

The bit pattern (e.g., code) of the binary signal can be predetermined by developing a chart of different devices (e.g., torches) and assigning a binary signal to the device. In some embodiments, different bit locations can be assigned to different characteristics of the device (e.g., a logic low for bit 1 can correspond to a hand torch while a logic high for bit 1 can correspond to a machine torch).

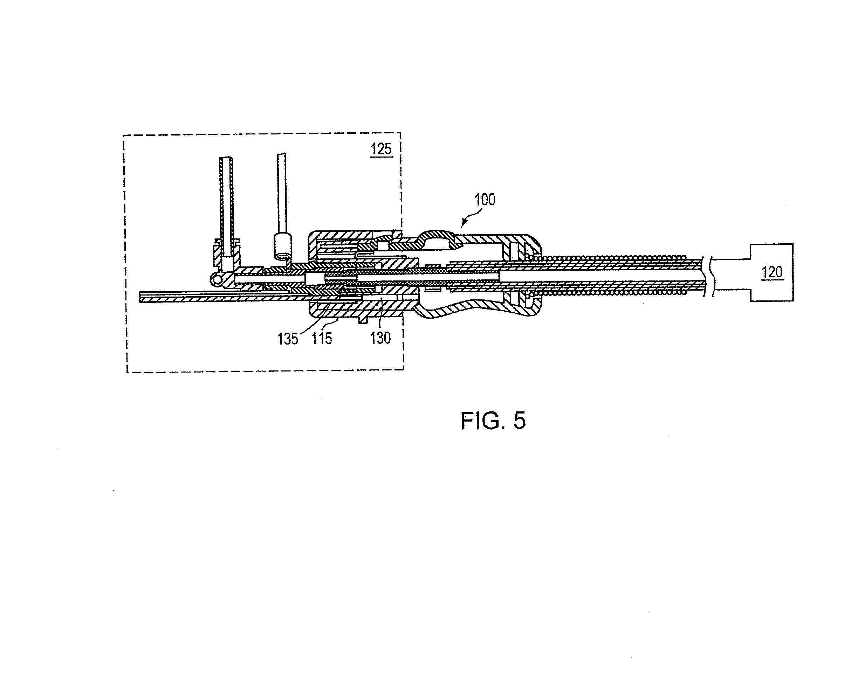

In some embodiments, the series of open circuits, closed circuits or any combination thereof, is used to generate the bit pattern for the binary signal 100 which is generated by a connector assembly connected to a corresponding connector assembly, such as a plug connector and socket connector configuration. **Figure 5** is a drawing of a connector assembly 110 engaged with a corresponding connector assembly 115. In some embodiments, the connector assembly 110 is disposed relative to a device for a thermal processing system 120 (e.g, torch). The connector assembly 110, for example, can be a plug disposed relative to a torch for a plasma arc system or a welding apparatus. The corresponding connector assembly 115 can be a socket disposed relative to a power supply 125. In some embodiments, a socket on a power supply mates with a plug disposed on a lead for a torch assembly.

In some embodiments, the connector assembly 110 includes at least one pin location 130. A pin populated pin location 130 can mate with the feature 135 disposed relative to a corresponding connector assembly 115, generating a closed circuit. The absence of a pin, on the other hand, can generate an open circuit when the connector assembly 110 is engaged with the corresponding connector assembly 115. As a result, the connector assembly 110 can include a plurality of pin locations 130 selectively populated with pins to establish a plurality of open circuits, closed circuits or any combination thereof when the connector assembly 110 is connected to the corresponding connector assembly 115. The configuration of open and closed circuits can be used to generate a multi-bit binary signal that is used to identify the device 120. By way of example only, a plug on a handheld plasma arc torch can include a plurality of pins that mate with a plurality of features on a socket of a power supply, generating a pattern of open and closed circuits that generate a multi-bit binary signal, identifying the device as a handheld plasma arc torch.

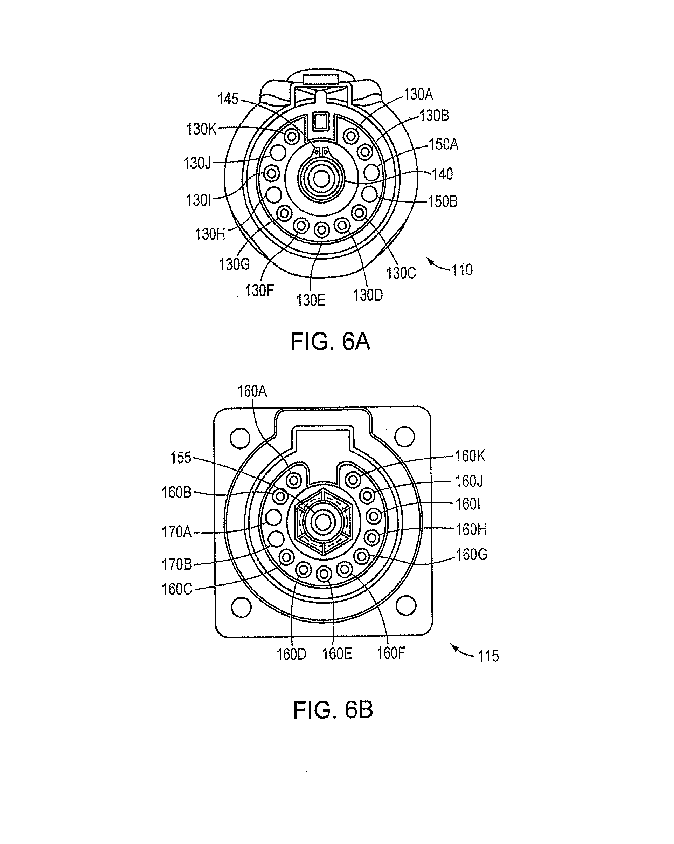

**Figure 6A** is a drawing of an end of a connector assembly 110 of a thermal processing system, according to an illustrative embodiment. In some embodiments, the connector assembly 110 is a plug associated with a torch for a plasma arc torch system or a welding apparatus. The connector assembly 110 can include a housing, a center conduit 140 (e.g., gas conduit for passing a gas between a gas supply and a plasma arc torch assembly) with a plurality of pin locations 130A-K populateable by pins, disposed relative to the conduit 140. The conduit 140 can conduct a gas through the center (e.g., sealed with a radial o-ring), and a main power current (e.g., about 30-100A+) through the slotted tangs 145. In some embodiments, the connector assembly 110 includes an operational current conduit (not shown) in the housing to conduct an operational current between a power supply and a plasma arc torch. The connector assembly 110 can be disposed relative to a torch assembly or a power supply. The plurality of pin locations 130A-K can be disposed on a torch or a power supply.

In some embodiments, pin locations 130A-K can be selectively populated to correspond to a characteristic of the plasma torch assembly (e.g., identification of the manufacturer of the torch assembly), the selective population or unpopulation of a pin location generating a binary signal. In some embodiments, a populated pin location can form a portion of a closed circuit and an unpopulated pin forms an open circuit, such that the combination of open and closed circuits creates a binary signal. In some embodiments, a characteristic of a torch assembly (e.g., plasma arc torch) can be identified by a look up table (e.g., such as a look-up table in **Figures 4A-4B****)** using the binary signal established by the selective population of pin locations. The look up table can be stored in a memory device of a power supply.

In some embodiments, pin locations 130A-K disposed about the conduit 140 are populated by operational pins at pin locations 130A-B and selectively populated by signal pins at pin locations 130C-K. Pin locations 130A-K can be placed at a predetermined creepage and clearance distance away from the conduit 140. In some embodiments, pin locations 130A and 130B are populated by pins that carry a pilot current for a plasma arc torch, acting as an operational pin, while pin locations 130C-K can be selectively populated by signal pins carrying a signal current. At least one empty pin location 150A-B can be disposed between pin locations 130A-B (e.g., populated by operational pins) and/or pin locations 130C-K (e.g., populated by signal pins) to generate the binary signal. In some embodiments, empty pin locations can be used to create sufficient creepage and/or clearance. In some embodiments, pin locations 130C-K are populated with pins that function only as signal pins, merely providing representations of torch or component configurations, and do not provide an operational signal such as a current or an actual signal measurement or transmission.

In some embodiments, three of the pin locations 130C-E are populated by signal pins that are dedicated to every torch configuration. By way of example only, pin location 130C can be populated by a signal pin that can be electrically connected to the torch trigger for a "cap sense" signal, pin location 130D can be populated with a signal pin that can be tied electrically connected to the "start" safety circuit in the torch, and pin location 130E can be populated with a signal pin that can be used as "common" return or ground. In some embodiments, six pin locations configured to be selectively populated with up to six "signal" pins are used to identify the thermal processing system, yielding 64 possible combinations. A benefit of utilizing a binary signal is the multiplicity of the different possible combinations. For example, if seven pin locations are configured to be selectively populated with up to seven "signal" pins, the configuration can be used to provide up to 128 different signal combinations, each of which can correspond to different look-up conditions such as those described herein. In some embodiments, the connector assembly 110 contains the number of pins required to define the signal. Signal pins populating locations 130F-K can be tied to the pin populating pin location 130E used as "common" return or ground. In embodiments where it is disadvantageous to have signal pin populating locations 130F-K return at a common potential, then each pin populating location 130F-K each has a dedicated return/ground. In some embodiments, signal pins populating pin locations 130F-K are tied to a common return or ground that is disposed in the connector (e.g., the connector assembly 110 and/or in the correspondence connector assembly 125), and does not extend beyond the connector (e.g., does not extend to the plasma arc torch, leads in the torch, or further in the power supply). In some embodiments, pins populating pin locations 130F-K do not send a signal to the torch or power supply.

**Figure 6B** is a drawing of a corresponding connector assembly 115 adapted to mate with the connector assembly 110 of **Figure 6A****.** The corresponding connector assembly 115 can have a feature 155 adapted to receive and/or mate with the conduit 140 of the connector assembly 110 i**n** **Figure 6A****.** The corresponding connector assembly 115 also can have a plurality of features 160A-K, 170A-B. Features 160A-K can be adapted to receive the pins that can be selectively populated in features 130A-K disposed relative to the connector assembly 110 of **Figure 6A****.** The features 130A-K of the corresponding connector assembly 115 can be disposed relative to a torch assembly or a power supply.

In some embodiments, the corresponding connector assembly 115 includes a socket housing and features 160A-K (e.g., receptors) adapted to receive pins that can be selectively populated in features 130A-K. The socket housing can be populated with all the necessary receptors. In some embodiments, the corresponding connector assembly 115 is a socket disposed relative to a power supply. In some embodiments where the power supply wants to detect the full signal, the power supply can include, for example, six features adapted to receive up to the six signal pins selectively populating pin locations in the connector assembly of **Figure 6A****.** In some embodiments, the corresponding connector assembly 115 (e.g., socket housing) contains pin locations selectively populated or unpopulated by pins and the connector assembly 110 contains signal sockets or other similar structure or features that allow an electrical connection between the socket and the connector assembly 110.

In some embodiments, when the connector assembly 110 of **Figure 6A** and the corresponding connector assembly 115 of **Figure 6B** are engaged, the features 130F-K populated with signal pins form a closed circuit with the corresponding features 160F-K in the corresponding connector assembly 115 of **Figure 6****B.** In some embodiments, when connector assembly 110 and corresponding connector assembly 115 are engaged, any feature 160F-K of the corresponding connector assembly 115 that does not receive a pin of the connector assembly 110 of **Figure 6A****,** forms a open circuit.

In some embodiments, a feature 160F-K of **Figure 6B** that receives and/or mates with a signal pin populated in a feature 130F-K in **Figure 6A** forms a closed circuit that has a logic high or signal value of "1" or can also have a logic low or signal value of "0". A feature 160F-K that does not receive a pin can form an open circuit that can have a logic low or signal value of "0" or can also have a logic high or signal value of "1". The combination of the logic high or logic low, based on the pattern of open circuits, closed circuits or any combination thereof, can be used to generate a multi-bit pattern binary signal. The bit pattern of the multi-bit binary signal can be used to identify a device associated with the thermal processing system. In some embodiments, an identification device, such as an identification device disposed relative to a power supply, can utilize the signal via hardware logic devices, software, or both, to form the binary signal and identify a device associated with the thermal processing system.

By way of example, the connector assembly may only have signal pin 130F used as a signal pin. In this example, if an open circuit were associated with a logic low or a signal value of "0", then such a configuration would result in generating five open circuits followed by one closed circuit, generating a binary signal of "000001." A binary signal of "000001" according to the exemplary chart of **Figures 4A** **and** **4B****,** can identify the device as a 45 Amp "Mech 25" mechanized plasma arc torch system. Similarly, by way of example, the connector assembly may not have any signal pins populated in pin locations 130F-K. Such a configuration would result in generating six open circuits and generate a binary signal of "000000" which, according to the exemplary chart of **Figures 4A** **and** **4B****,** can identify the device as a 45 Amp "Hand 25"' plasma arc torch system.

While the invention has been particularly shown and described with reference to specific illustrative embodiments, it should be understood that various changes in form and detail may be made without departing from the spirit and scope of the invention.

## Claims

1. A system for identifying a torch assembly associated with a thermal processing system comprising:
a connector assembly including a plurality of pin locations that can be selectively populated by pins;
a corresponding connector assembly including a plurality of features adapted to receive the pins;
wherein a feature that receives a pin generates a closed circuit permitting current flow and a feature that does not receive a pin generates an open circuit not permitting current flow; and
wherein unique combinations of closed circuits and open circuits are used to generate a multi-bit binary signal that identifies at least one characteristic of the torch assembly; and
a detector that detects the multi-bit binary signal; and
a control mechanism in communication with the detector, the control mechanism identifying at least one characteristic of the torch assembly using the multi-bit binary signal.

2. The system of claim 1, wherein the detector comprises a component for measuring voltage highs and lows corresponding to whether or not a pin has been received by a corresponding feature.

3. The system of claim 1, wherein all pins utilize a common return or ground.

4. The system of claim 1, wherein the control mechanism utilizes a binary lookup table to determine at least one characteristic of the torch assembly based on the multi-bit binary signal.

5. The system of claim 1 wherein the thermal processing system is at least one of a welding apparatus or a plasma arc torch system.

6. The system of claim 1 wherein the control mechanism includes at least one of an integrated circuit, software, or a digital logic device to process the multi-bit binary signal.

7. A method for identifying a torch assembly associated with a thermal processing system comprising:
connecting a torch assembly to the thermal processing system, wherein one of the torch assembly and thermal processing system is provided with a connector assembly including a plurality of pin locations that is selectively populated by pins and the other is provided with a corresponding connector assembly including a plurality of features adapted to receive the pins;
wherein a feature that receives a pin generates a closed circuit permitting current flow and a feature that does not receive a pin generates an open circuit not permitting current flow;
wherein unique combinations of closed circuits and open circuits are used to generate a multi-bit binary signal that identifies at least one characteristic of the torch assembly; and
detecting the multi-bit binary signal.

8. The method of claim 7 further comprising identifying at least one characteristic of the torch assembly using the multi-bit binary signal.

9. The method of claim 7 further comprising varying at least one of a gas pressure, gas timing, pilot, cut timing or mechanised remote in the thermal processing system, based on the identified torch assembly.

10. A torch for a plasma arc torch system comprising:
a plurality of electrical paths configured to carry a current; and
a plurality of pin locations that are selectively populated by pins or a plurality of features adapted to receive the pins;
wherein a feature that receives a pin generates a closed circuit permitting current flow and a feature that does not receive a pin generates an open circuit not permitting current flow; and
wherein unique combinations of closed circuits and open circuits are used to generate a multi-bit binary signal that identifies at least one characteristic of the torch assembly.

11. The torch of paragraph 14 further comprising: a detector to detect the multi-bit binary-signal based on a plurality of open or closed circuits; and a control mechanism processing a multi-bit binary-signal based on the at least one of the open or closed circuits, wherein a bit pattern of the multi-bit binary signal identifies the torch.

12. A connector assembly for a plasma torch assembly comprising:
a housing;
a gas conduit in the housing for passing gas between a gas supply and a plasma arc torch assembly;
an operational current conduit in the housing to conduct an operational current from a power supply to the plasma arc torch assembly;
a plurality of pin locations that can be selectively populated by pins, wherein the selective population of a pin location corresponds to a characteristic of the plasma arc torch assembly.

13. The connector assembly of claim 12 wherein the connector assembly is disposed relative to the plasma arc torch.

14. The connector assembly of claim 13 further comprising a power supply having a corresponding connector that receives the connector assembly, wherein closed circuits are generated in populated pin locations and open circuits are generated in unpopulated pin locations.

15. An assembly for identifying a torch assembly associated with a thermal processing system comprising:
a connector assembly including a plurality of pin locations that can be selectively populated by pins;
a corresponding connector assembly including a plurality of features adapted to receive the pins;
wherein a feature that receives a pin generates a closed circuit permitting current flow and a feature that does not receive a pin generates an open circuit not permitting current flow; and
wherein unique combinations of closed circuits and open circuits are used to generate a multi-bit binary signal that identifies at least one characteristic of the torch assembly; and
a detector that detects the multi-bit binary signal; and
a control mechanism in communication with the detector, the control mechanism identifying at least one characteristic of the torch assembly using the multi-bit binary signal.
